# EUROPÄISCHE PATENTSCHRIFT

(11) **EP 4 276 498 B1**
(45) Veröffentlichungstag und Bekanntmachung des Hinweises auf die Patenterteilung: **21.08.2024**
(21) Anmeldenummer: 22173148.2
(22) Anmeldetag: 13.05.2022
(51) Int. Cl.: G01V 8/20, F16P 3/14

(54) **ÜBERWACHUNGSEINRICHTUNG**
MONITORING DEVICE
DISPOSITIF DE SURVEILLANCE

(43) Veröffentlichungstag der Anmeldung: 15.11.2023
(73) Patentinhaber: Leuze electronic GmbH + Co. KG, 73277 Owen/Teck (DE)
(72) Erfinder: Feller, Bernhard, 86316 Friedberg (DE); Aldiek, Norbert, 73230 Kirchheim/Teck (DE); Rohbeck, Volker, 85244 Röhrmoos (DE)
(74) Vertreter: Ruckh, Rainer Gerhard

(56) Entgegenhaltungen:
- EP-A1- 1 437 542
- EP-A1- 3 945 237
- DE-A1- 10 341 007
- DE-A1- 102009 050 826
- DE-A1- 102012 109 311

## Beschreibung

Die Erfindung betrifft eine Überwachungseinrichtung sowie ein Verfahren zum Betrieb eines Lichtgitters.

Derartige Überwachungseinrichtungen umfassen ein Lichtgitter, dass zur Erfassung von Objekten in einem Überwachungsbereich dient. Das Lichtgitter weist eine in einem Gehäuse integrierte Sende-/Empfängereinheit mit einer Anordnung von Lichtstrahlen emittierenden Sendern und Lichtstrahlen empfangenden Empfängern an einem Rand des Überwachungsbereichs auf. Die Sender und Empfänger können mittels Transceivern realisiert werden. Am gegenüberliegenden Rand des Überwachungsbereichs sind Strahlumlenkmittel für die Lichtstrahlen vorgesehen, die beispielsweise in Form von Prismen ausgebildet sein können. Bei freiem Überwachungsbereich durchqueren die Lichtstrahlen eines Senders den Überwachungsbereich, werden an den Strahlumlenkmitteln, wie Eckspiegeln oder Prismen, umgelenkt und werden dann mit einem räumlichen Versatz zu den einfallenden Lichtstrahlen, vorzugsweise parallel zu diesen nochmals durch den Überwachungsbereich geführt und treffen auf einen zugeordneten Empfänger. Bei einem Objekteingriff im Überwachungsbereich wird der Strahlengang der Lichtstrahlen unterbrochen. Durch eine Mehrfachanordnung derartiger Sender-/Empfängerpaare mit zugeordneten Strahlumlenkmitteln kann ein großflächiger Überwachungsbereich überwacht werden.

Derartige Lichtgitter können als Sicherheitslichtgitter ausgebildet sein, die im Bereich der Sicherheitstechnik, insbesondere im Bereich des Personenschutzes eingesetzt werden. Insbesondere werden diese Sicherheitslichtgitter zur Gefahrenbereichsüberwachung an gefahrbringenden Anlagen eingesetzt.

Zur Erfüllung der sicherheitstechnischen Anforderungen weist das Sicherheitslichtgitter eine mehrkanalige, insbesondere zweikanalige Auswerteeinheit zur Auswertung von Empfangssignalen der Empfänger auf.

Die Funktion des Sicherheitslichtgitters ist derart, dass in der Auswerteeinheit durch Auswertung der Empfangssignale der Empfänger festgestellt wird, ob ein Objekteingriff im Überwachungsbereich vorhanden ist oder nicht und abhängig von dieser Auswertung Schaltsignale generiert werden, die über wenigstens einen Schaltausgang in die die Anlage steuernde Anlagensteuerung ausgegeben werden. Der Schaltausgang ist ein binärer Ausgang mit den Schaltzuständen "abgeschaltet" und "eingeschaltet" oder Teil einer sicheren Datenübertragung.

Wird mit dem Sicherheitslichtgitter kein Objekt im Überwachungsbereich detektiert, liegt keine Gefahrensituation vor und demzufolge wird der Schaltausgang eingeschaltet, wodurch der Betrieb der Anlage freigegeben ist.

Wird dagegen mit dem Sicherheitslichtgitter ein Objekt im Überwachungsbereich registriert, liegt eine Gefahrensituation vor und der Schaltausgang wird abgeschaltet, wodurch die Anlage in einen sicheren Zustand versetzt wird, insbesondere abgeschaltet wird.

Wird in der Auswerteeinheit ein Fehler aufgedeckt, wird ebenfalls der Schaltausgang abgeschaltet, da dann kein fehlerfreier Betrieb des Sicherheitslichtgitters mehr gewährleistet ist.

Die DE 10 2009 050 826 A1 betrifft einen optischen Sensor, der zur Erfassung von Objekten in einem Überwachungsbereich dient. Der optische Sensor umfasst eine an einem ersten Rand des Überwachungsbereichs angeordnete Sende-/Empfangseinheit, die wenigstens einen Lichtstrahlen emittierenden Sender und einen Lichtstrahlen empfangenden Empfänger aufweist. An dem Empfänger anstehende Empfangssignale zur Generierung eines Objektfeststellungssignals werden in einer Auswerteeinheit ausgewertet. Weiterhin umfasst der optische Sensor einen an einem zweiten Rand des Überwachungsbereichs angeordneten Reflektor, an welchen bei freiem Überwachungsbereich vom Sender emittierte Lichtstrahlen zum Empfänger reflektiert werden. Der Reflektor besteht zumindest teilweise aus fluoreszierendem Material, so dass die Wellenlänge der vom Sender emittierten Lichtstrahlen bei der Reflexion am Reflektor modifiziert wird. Der Empfänger ist auf diese modifizierte Wellenlänge abgestimmt.

Die DE 103 41 007 A1 betrifft eine Lichtschrankenanordnung zur Überwachung von Objekten in einem Überwachungsbereich mit wenigstens einem Sendelichtstrahlen emittierenden Sender, wenigstens einem Empfänger zum Empfang der Sendelichtstrahlen, wenigstens einer Auswerteeinheit zur Generierung eines Objektfeststellungssignals in Abhängigkeit der am Ausgang des Empfängers anstehenden Empfangssignale und mit einer Schnittstelle, mittels derer Parameterwerte in die Auswerteeinheit einlesbar sind. Die Schnittstelle weist einen Transponder auf, von welchem die Parameterwerte berührungslos in die Auswerteeinheit einlesbar sind.

Die DE 10 2012 109 311 A1 betrifft eine Vorrichtung zum sicheren Überwachen einer Schließposition zweier relativ zueinander beweglicher Teile mit einem Betätiger und einen Sensor. Die Teile bilden in der Schließposition eine Trennfuge, die zwischen dem Betätiger und dem Sensor verläuft. Der Sensor besitzt einen optischen Sender, einen optischen Empfänger und ein Sensorgehäuse mit einer ersten Lichtaustrittsöffnung und einer ersten Lichteintrittsöffnung. Der Betätiger besitzt ein Betätigergehäuse mit einer zweiten Lichtaustrittsöffnung und einer zweiten Lichteintrittsöffnung. Der optische Sender sendet einen ersten Lichtstrahl durch die erste Lichtaustrittsöffnung zu der zweiten Lichteintrittsöffnung. Der Betätiger sendet einen zweiten Lichtstrahl durch die zweite Lichtaustrittsöffnung und die erste Lichteintrittsöffnung zu dem Empfänger. Das Sensorgehäuse und das Betätigergehäuse haben jeweils eine Montagefläche zur Fixierung an den beweglichen Teilen. Die Montageflächen definieren zumindest eine Montageebene relativ zu den beweglichen Teilen. Der erste Lichtstrahl und/oder der zweite Lichtstrahl verlaufen unter einem spitzen Winkel zu einer Schließebene, die senkrecht zu der Montageebene und parallel zu der Trennfuge liegt.

Die EP 1 437 542 A1 betrifft ein Lichtgitter und ein Verfahren zu dessen Justierung. Das erfindungsgemäße Lichtgitter weist eine eine vorgegebene Anzahl von Sendelichtstrahlen emittierenden Sendern aufweisende Sendereinheit und eine eine vorgegebene Anzahl von Empfängern aufweisende Empfängereinheit auf. Die Sender und Empfänger bilden jeweils Strahlachsen definierende Paare, wobei bei freiem Strahlengang die von einem Sender emittierten Sendelichtstrahlen auf den zugeordneten Empfänger treffen, und wobei bei einer durch einen Objekteingriff bedingten Unterbrechung wenigstens einer Strahlachse ein Objektfeststellungssignal generierbar ist. Zur Justierung der Strahlachsen der Sendereinheit sind in vorgegebenen Sollpositionen relativ zu dem Sender wenigstens zwei sichtbare Richtstrahlen emittierende Sendeelemente vorgesehen, welche jeweils auf eine Zielmarke an der Empfängereinheit ausrichtbar sind.

Die EP 3 945 237 A1 betrifft eine Überwachungseinrichtung mit einem Sensor, mittels dessen eine Objektüberwachung in einem Schutzfeld durchgeführt wird. Bei Registrieren eines Objekteingriffs im Schutzfeld wird eine Sicherheitsfunktion ausgelöst. Weiterhin sind Mittel zur Generierung einer Überbrückungsfunktion vorgesehen, mittels derer wenigstens ein Teil des Schutzfelds überbrückt wird, sodass dort ein Objekteingriff nicht zur Auslösung der Sicherheitsfunktion führt. Es sind weiterhin Sensormittel zur Wegerfassung einer beweglichen Einheit vorgesehen, in deren wiederkehrend in den Erfassungsbereich geführte Markierungselemente der beweglichen Einheit detektiert werden, wobei die Überbrückungsfunktion anhand der Wegerfassung gesteuert und/oder überwacht ist.

Der Erfindung liegt die Aufgabe zugrunde ein Lichtgitter bereitzustellen, mittels dessen eine sichere Überwachungsfunktion realisiert wird, ohne dessen Verfügbarkeit unnötig einzuschränken.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Lichtgitter zur Erfassung von Objekten in einem Überwachungsbereich, mit einer Sende-/Empfangseinheit an einem Rand des Überwachungsbereichs und Strahlumlenkmitteln am gegenüberliegenden Rand des Überwachungsbereichs. Die Sende-/Empfangseinheit weist wenigstens einen Transceiver auf, der zum Senden und Empfangen von Lichtstrahlen ausgebildet ist. Bei freiem Überwachungsbereich treffen die Lichtstrahlen auf die Strahlumlenkmittel und werden von dort zurück zum Transceiver geführt. Bei einem Objekteingriff im Überwachungsbereich erfolgt eine Strahlunterbrechung von Lichtstrahlen. Weiterhin ist eine Auswerteeinheit vorgesehen, in welcher in Abhängigkeit von Empfangssignalen des Transceivers ein binäres Schaltsignal generiert wird, dessen Schaltzustände angeben, ob ein Objekt im Überwachungsbereich vorhanden ist. Mit dem wenigstens einen Transceiver werden redundante von Lichtstrahlen gebildete optische Pfade im Überwachungsbereich gebildet. Der wenigstens eine Transceiver weist einen Transceiver-Controller mit einem wenigstens zwei Sendeelemente steuernden Sende-Controller und mit einem wenigstens zwei Empfangselemente steuernden Empfangs-Controller auf. Mit von den Sendeelementen emittierten Lichtstrahlen werden unterschiedliche optische Pfade generiert. Der wenigstens eine Transceiver steuert mit seinem Sende-Controller mehrere Paare von Empfangselemente an und mit seinem Empfangs-Controller mehrere Paare von Empfangselementen. Die Lichtstrahlen der Sendeelemente bilden eine mehrstrahlige Anordnung mit redundanten optischen Pfaden aus. Die Lichtstrahlen jeweils eines Paares werden von Sendeelementen und Empfangselementen über dieselben Strahlumlenkmittel abgelenkt und bilden redundante optische Pfade aus. Die Lichtstrahlen unterschiedlicher Paare werden von Sendeelementen und Empfangselementen über unterschiedliche, räumlich versetzte Strahlumlenkmittel abgelenkt und bilden verschiedene, räumlich versetzte optische Pfade aus.

Die Erfindung betrifft auch ein entsprechendes Verfahren. Das Lichtgitter der erfindungsgemäßen Überwachungseinheit ist vorteilhaft als Sicherheitslichtgitter ausbildet, d.h. es weist einen fehlersicheren Aufbau auf und kann somit im Bereich der Sicherheitstechnik eingesetzt werden.

Der Grundgedanke der Erfindung besteht darin, dass mit dem oder den Transceivern redundante optische Pfade innerhalb des Überwachungsbereichs realisiert werden. Mit diesen redundanten optischen Pfaden und den zugehörigen elektrischen Signalpfaden wird ein Objekt im Überwachungsbereich mehrfach, im einfachsten Fall doppelt detektiert. Dadurch wird die Sicherheit bei den Objektdetektionen signifikant erhöht. Auch werden dadurch Ausfälle aufgrund optischer oder elektrischer Störungen vermieden oder zumindest reduziert. Insbesondere wird dadurch auch ein Beitrag für die Fehlersicherheit des Lichtgitters geleistet, die für einen Einsatz im Bereich der Sicherheitstechnik wesentlich ist.

Ein weiterer wesentlicher Aspekt der Erfindung besteht darin, dass bei Ausfall eines optischen Pfads oder eines zugehörigen elektrischen Signalpfads der wenigstens eine weitere optische Pfad oder elektrische Signalpfad noch intakt ist, so dass das Lichtgitter bei einem derartigen Fehlerfall auch weiterbetrieben werden kann. Dadurch wird die Verfügbarkeit des Lichtgitters erhöht. Unnötige Produktionsstopps einer mit dem Lichtgitter überwachenden Anlage werden dadurch vermieden.

Erfindungsgemäß weist wenigstens der eine Transceiver einen Transceiver-Controller mit einem wenigstens zwei Sendeelemente steuernden Sende-Controller und mit einem wenigstens zwei Empfangselemente steuernden Empfangs-Controller auf. Mit den von den Sendeelementen emittierten Lichtstrahlen werden unterschiedliche optische Pfade generiert.

Die redundante optische Pfade generierenden Sendeelemente und Empfangselemente werden somit zentral von einem Transceiver-Controller angesteuert.

Dabei werden die von den beiden Sendeelementen emittierten Lichtstrahlen bei freiem Überwachungsbereich über dieselben Strahlumlenkmittel zu dem jeweilig zugeordneten Empfangselement geführt.

Die den redundanten optischen Pfad generierenden Lichtstrahlen sind somit entlang derselben oder wenigstens annähernd derselben Lichtwege geführt, so dass mit den Lichtstrahlen dieselben Bereiche des Überwachungsbereichs überwacht werden. Damit wird ein Objekt im Überwachungsbereich mit dem oder den redundanten optischen Pfaden mehrfach detektiert, so dass die Sicherheit der Objektdetektion erhöht ist, wobei insbesondere die Störanfälligkeit gegen äußere optische Störeinstrahlungen erhöht wird.

Die Sendeelemente und Empfangselemente sind vorteilhaft jeweils räumlich versetzt zueinander angeordnet.

Daran angepasst werden die Lichtstrahlen jedes Sendeelements über zwei Strahlumlenkmittel so abgelenkt, dass die auf die Strahlumlenkmittel zulaufenden Lichtstrahlen und die an den Strahlumlenkmitteln reflektierten Lichtstrahlen zumindest näherungsweise parallel zueinander verlaufen.

Dadurch wird bereits mit den Lichtstrahlen eines Senders ein flächiger Bereich des Überwachungsbereichs abgedeckt.

Gemäß einer konstruktiv vorteilhaften Ausgestaltung sind die Strahlumlenkmittel von Prismen, Eckspiegeln oder gekrümmten Lichtleitern gebildet.

Mit den Prismen, Eckspiegeln oder Lichtleitern erfolgt jeweils eine Strahlenumlenkung um etwa oder exakt 90°, so dass nach zweimaliger Umlenkung an den beiden Prismen die einfallenden und an den Strahlumlenkmitteln reflektierten Lichtstrahlen zumindest näherungsweise parallel verlaufen.

Vorteilhaft ist jeweils ein Prismenpaar oder Eckspiegelpaar über eine Lichtleitstrecke verbunden.

Damit werden optische Verluste bei der Strahlführung der Lichtstrahlen zwischen den Prismen reduziert.

Gemäß einer vorteilhaften Ausführungsform steuert wenigstens der eine Transceiver mit seinem Sende-Controller mehrere Paare von Empfangselementen an. Mit seinem Empfangs-Controller werden mehrere Paare von Empfangselementen angesteuert, wobei die Lichtstrahlen der Sendeelemente eine mehrstrahlige Anordnung mit redundanten optischen Pfaden ausbilden.

Dabei werden die Lichtstrahlen jeweils eines Paares von Sendeelementen und Empfangselementen über dieselben Strahlumlenkmittel abgelenkt, wodurch redundante optische Pfade ausgebildet werden.

Die Lichtstrahlen unterschiedlicher Paare von Sendeelementen und Empfangselementen werden über unterschiedliche, räumlich versetzte Strahlumlenkmittel abgelenkt, wodurch verschiedene, räumlich versetzte optische Pfade ausgebildet werden.

Damit kann das Lichtgitter auf eine mehrstrahlige Anordnung erweitert werden, mit der auch großflächige Überwachungsbereiche überwacht werden können.

Die mit dem oder den Transceivern angesteuerten Sendeelemente und Empfangselemente bilden eine modulare Anordnung, mit der eine flexible Anpassung des Lichtgitters an applikationsspezifisch vorgegebene, unterschiedliche Überwachungsbereiche ermöglicht wird.

Diese Flexibilität wird dadurch noch erhöht, dass Paare von Sendeelementen und Empfangselementen selektiv aktivierbar sind.

Dabei emittieren nur aktivierte Sendeelemente Lichtstrahlen, die bei freien Überwachungsbereichen über zugeordnete Strahlumlenkmittel geführt sind.

Die Aktivierung von Sendeelementen und Empfangselementen kann über die Firmware eines die Auswerteeinheit bildenden Rechnersystems vorgegeben werden. Dies führt zu einer einfachen und flexiblen Konfigurierung des Lichtgitters. Hierzu wird das Lichtgitter mit einer Grundkonfiguration von Sendeelementen und Empfangselementen bereitgestellt. Aus dieser Grundkonfiguration kann applikationsspezifisch durch selektives Auswählen und Aktivieren einzelner Sendeelemente und Empfangselemente flexibel eine spezifische Konfiguration über die Firmware vorgegeben werden, ohne dass die Hardware des Lichtgitters geändert werden muss. Ist diese Konfiguration durchgeführt, werden der aktivierten Sendeeinheit und Empfangseinheit Strahlumlenkmittel zugeordnet, was ohne großen Aufwand durchgeführt werden kann.

Gemäß einer besonders vorteilhaften Ausführungsform weist das Lichtgitter eine redundante Transceiver-Anordnung auf.

Damit sind nicht nur die von den Lichtstrahlen des Lichtgitters gebildeten optischen Pfade redundant ausgebildet, sondern auch die zugeordneten elektronischen Komponenten also die elektrischen Signalpfade, wodurch die Verfügbarkeit des Lichtgitters weiter erhöht wird.

Besonders vorteilhaft sind Sende-Controller sowie Empfangs-Controller der redundanten Transceiver-Anordnung unterschiedlichen optischen Pfaden zugeordnet.

Bei der Ausbildung des Lichtgitters als Sicherheitslichtgitter weist dessen Auswerteeinheit einen fehlersicheren Aufbau auf. Dies wird dadurch realisiert, dass die Auswerteeinheit wenigstens zwei Auswertekanäle aufweist, in welchen unabhängig voneinander das Schaltsignal generiert wird.

Prinzipiell kann das Schaltsignal über einen gemeinsamen Schaltausgang ausgegeben werden. Besonders vorteilhaft weist jeder Auswertekanal einen Schaltausgang auf, über welchen das Schaltsignal an eine externe Einheit ausgegeben wird. Bei abgeschalteten Schaltausgängen wird die externe Einheit stillgesetzt. Bei eingeschalteten Schaltausgängen wird der Betrieb der externen Einheit uneingeschränkt freigegeben.

Die Fehlersicherheit der Auswerteeinheit wird insbesondere dadurch erreicht, dass in jedem Auswertekanal Fehlerkontrollmittel zur Aufdeckung von Fehlern in diesem Auswertekanal und zur gegenseitigen Kontrolle der Auswertekanäle vorgesehen sind.

Vorteilhaft wird bei Aufdeckung eines Fehlers in einem Auswertekanal der Schaltausgang dieses Auswertekanals abgeschaltet und die externe Einheit wird mit dem wenigstens einen verbleibenden intakten Auswertekanal in einem degradierten Betrieb weiterbetrieben, wenn dessen Schaltausgang eingeschaltet ist.

Im Gegensatz zu bekannten Überwachungseinrichtungen führt ein Aufdecken eines Fehlers in einem Auswertekanal nicht zum Stillsetzen einer externen Einheit, wie einer Maschine oder Anlage. Vielmehr kann die Maschine oder Anlage in einem degradierten Betrieb weiter betrieben werden.

Der degradierte Betrieb wird durch die Ausfallmeldung des defekten Schaltausgangs entweder direkt mit dem Ausgang des Schaltausgangs oder mit einer separaten Meldung der externen Einheit angezeigt.

Der wenigstens eine Auswertekanal, in dem kein Fehler festgestellt wird, übernimmt dann die Überwachungsfunktion als Voraussetzung für die Aufrechterhaltung des degradierten Betriebs.

Der degradierte Betrieb ist gegenüber dem uneingeschränkten Betrieb eingeschränkt, wobei die mit dem verbleibenden fehlerfreien Auswertekanal durchgeführte Überwachung ausreichend ist, einen sicheren degradierten Betrieb zu gewährleisten.

Bei Aufdecken eines Fehlers, der in allen Auswertekanälen wirkt, werden alle Schaltausgänge abgeschaltet, wodurch der externen Einheit ein Systemausfall signalisiert wird.

Bei Auftreten von Fehlern im Gesamtsystem des Sicherheitsgeräts, das heißt in allen Auswertekanälen, ist ein sicherer Betrieb der externen Einheit nicht mehr gewährleistet, so dass diese durch Abschalten der Schaltausgänge in einen sicheren Zustand überführt wird, insbesondere abgeschaltet wird.

Damit sind einerseits die Anforderungen für den Einsatz der Überwachungseinrichtung im Bereich der Sicherheitstechnik erfüllt, da sowohl im uneingeschränkten Betrieb als auch im degradierten Betrieb die jeweiligen Sicherheitsanforderungen erfüllt werden.

Gleichzeitig wird im Vergleich zu bekannten Überwachungseinrichtungen deren Verfügbarkeit, insbesondere die Verfügbarkeit der externen Einheit erhöht, in dem bei Auftreten eines Fehlers in nur einem Auswertekanal die externe Einheit nicht sofort stillgesetzt wird, sondern im degradierten Betrieb weiterbetrieben werden kann.

Im degradierten Betrieb kann die externe Einheit, insbesondere eine Anlage oder Maschine, beispielsweise nur noch Arbeitsvorgänge mit reduzierter Geschwindigkeit durchführen oder nur noch einen Teil der Arbeitsvorgänge durchführen.

Prinzipiell kann der degradierte Betrieb zeitlich unbeschränkt aufrechterhalten werden. Da jedoch im degradierten Betrieb nur noch eingeschränkte Überwachungsmöglichkeiten gegeben sind ist es sinnvoll, wenn der degradierte Betrieb nur für eine vorgegebene Zeit, beispielsweise für einige Tage oder eine Woche, aufrechterhalten wird.

Dabei wird der degradierte Betrieb durch Abschalten aller Schaltausgänge beendet.

Falls während des degradierten Betriebs die Betriebsspannung unterbrochen wird, sollte der degradierte Betrieb nach dem Wiedereinschalten die bereits abgelaufene Betriebszeit im degradierten Betrieb in vorherigen Einschaltphasen berücksichtigt werden und die restliche Betriebszeit entsprechend reduzieren. Dies kann z.B. dadurch erfolgen, dass die Betriebszeit im degradierten Betrieb laufend in einem nichtflüchtigen Speicher gespeichert wird und nach dem Widereinschalten diese bereits aufgelaufenen Betriebszeiten mit degradiertem Betrieb im laufenden Betrieb berücksichtigt werden und die verbleibende Zeit des degradierten Betriebs reduziert wird.

Gemäß einer vorteilhaften Ausgestaltung sind die Fehlerkontrollmittel zur Aufdeckung von Fehlern der Schaltausgänge ausgebildet. Bei einer Aufdeckung eines Fehlers des Schaltausgangs eines Auswertekanals wird der wenigstens eine weitere Schaltausgang abgeschaltet.

Dies bedeutet, dass bei Ausfall eines Schaltausgangs kein degradierter Betrieb möglich ist. Vielmehr werden dann alle Schaltausgänge abgeschaltet und die externe Einheit wird stillgesetzt.

Gemäß einer vorteilhaften Ausführungsform sind dem Auswertekanal Sendeelemente und Empfangselemente unterschiedlicher optischer Pfade zugeordnet.

Zweckmäßig sind die Sendeelemente und die Empfangselemente eines redundanten optischen Pfads parallel betrieben. Bei Ausfall eines Sendeelements oder Empfangselements wird das wenigstens eine weitere Sendeelement oder Empfangselement des optischen Pfads und der zugeordneten elektrischen Signalpfade weiter betrieben.

Der Ausfall eines Sendeelements oder Empfangselements oder allgemein eines Signalpfads führt dann nicht zum Ausfall des wenigstens einen weiteren Sendeelements oder Empfangselements des optischen Pfads, so dass die Überwachungseinrichtung weiter betrieben werden kann.

Vorteilhaft sind die Ausgänge der Empfangselemente eines redundanten optischen Pfads über ein Summiernetzwerk verbunden.

Durch das Summieren der Ausgangssignale der Empfangselemente wird im fehlerfreien Fall das Signal-/Rauschverhältnis bei der Objektdetektion verbessert.

Die Erfindung wird im Folgenden anhand der Zeichnungen erläutert. Es zeigen.
- Figur 1:: Erstes Ausführungsbeispiel eines Lichtgitters der erfindungsgemäßen Überwachungseinrichtung.
- Figur 2:: Zweites Ausführungsbeispiel eines Lichtgitters der erfindungsgemäßen Überwachungseinrichtung.
- Figur 3:: Drittes Ausführungsbeispiel eines Lichtgitters der erfindungsgemäßen Überwachungseinrichtung.
- Figur 4:: Viertes Ausführungsbeispiel eines Lichtgitters der erfindungsgemäßen Überwachungseinrichtung.
- Figur 5:: Fünftes Ausführungsbeispiel eines Lichtgitters der erfindungsgemäßen Überwachungseinrichtung.
- Figur 6:: Redundante Senderanordnung für das Lichtgitter der erfindungsgemäßen Überwachungseinrichtung.
- Figuren 7a-c:: Zeitabhängigkeit von Lichtpegeln für die Senderanordnung gemäß Figur 6.
- Figur 8:: Redundante Empfängeranordnung für das Lichtgitter der erfindungsgemäßen Überwachungseinrichtung.
- Figuren 9a-c:: Zeitabhängigkeit von Signalpegeln für die Empfängeranordnung gemäß Figur 8.
- Figur 10:: Ausführungsbeispiel einer Auswerteeinheit des Lichtgitters der erfindungsgemäßen Überwachungseinrichtung.

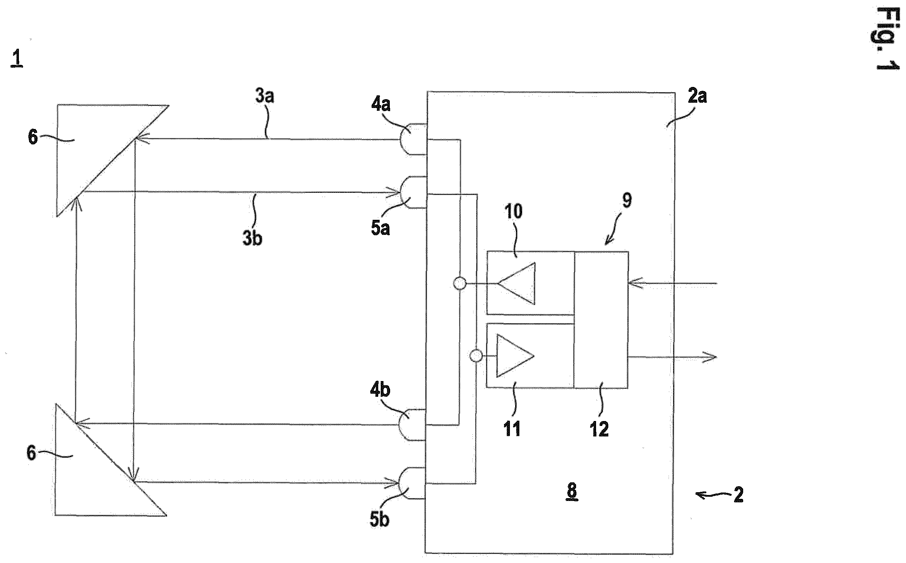

Die Figuren 1 bis 5 zeigen unterschiedliche Ausführungsbeispiele eines Lichtgitters 1 der erfindungsgemäßen Überwachungseinrichtung.

Das Lichtgitter 1 ist als Sicherheitslichtgitter ausgebildet und steuert eine externe Einheit, wie z.B. eine Anlage oder Maschine, von der Gefahren für Personen ausgehen können.

Das Lichtgitter 1 dient zur Erfassung von Objekten in einem Überwachungsbereich. Hierzu weist das Lichtgitter 1 eine in einem Gehäuse 2a integrierte Sende-/Empfangseinheit 2 mit einer Anordnung von Lichtstrahlen 3a, 3b emittierenden Sendeelementen 4a, 4b und Lichtstrahlen 3a, 3b empfangende Empfangselementen 5a, 5b auf. Die Sende-/Empfangseinheit 2 befindet sich an einem Rand des Überwachungsbereichs. Am gegenüberliegenden Rand des Überwachungsbereichs befindet sich eine Anordnung von optischen Strahlumlenkmitteln, die im vorliegenden Fall von Eckspiegeln 6 gebildet sind.

Bei freiem Überwachungsbereich werden die Lichtstrahlen 3a, 3b der Sendeelemente 4a, 4b durch den Überwachungsbereich geführt, jeweils an zwei Eckspiegeln 6 umgelenkt und verlaufen dann versetzt zu den einfallenden Lichtstrahlen 3a, 3b parallel (Figuren 1 bis 5) zu diesen zurück zu einem zugeordneten Empfangselement 5a, 5b. Bei einem Objekteingriff im Überwachungsbereich erfolgt eine Strahlunterbrechung von Lichtstrahlen 3a, 3b.

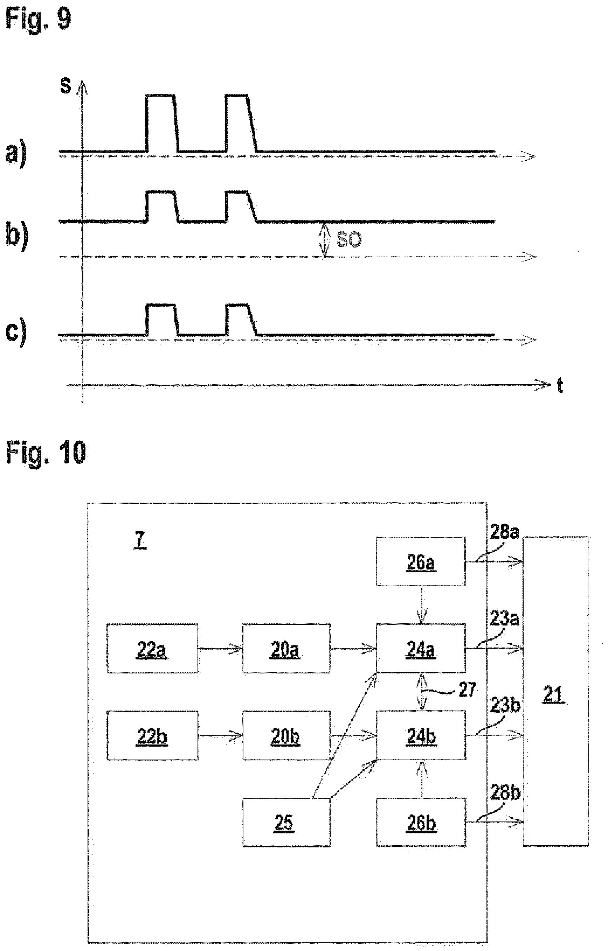

Das Lichtgitter 1 weist eine redundante, fehlersichere Auswerteeinheit 7 auf, wobei in Figur 10 ein Beispiel einer Auswerteeinheit 7 dargestellt ist. In der Auswerteeinheit 7 wird abhängig von Empfangssignalen der Empfangselemente 5a, 5b ein binäres Schaltsignal 23a, 23b generiert, dessen Schaltzustände angeben, ob sich ein Objekt im Überwachungsbereich befindet oder nicht.

Mit dem Schaltsignal 23a, 23b wird die externe Einheit gesteuert. Die Grundfunktion des Lichtgitters 1 ist derart, dass bei fehlerfreiem Betrieb und bei freiem Überwachungsbereich das Lichtgitter 1 den Betrieb der externen Einheit freigibt und dass bei einem Obj ekteingriff im Überwachungsbereich das Lichtgitter 1 die externe Einheit stillsetzt.

Erfindungsgemäß sind die Sendeelemente 4a, 4b und Empfangselemente 5a, 5b Bestandteil eine Transceivers 8. Der Transceiver 8 weist einen Transceiver-Controller 9 mit einem Sende-Controller 10 und einem Empfangs-Controller 11, sowie gemeinsamen Elektronikkomponenten 12, wie z.B. einem Resetgeber und eine Spannungsversorgung auf. Der Sende-Controller 10 ist zur Ansteuerung von Sendeelementen 4a, 4b, der Empfangs-Controller 11 zur Ansteuerung von Empfangselementen 5a, 5b ausgebildet.

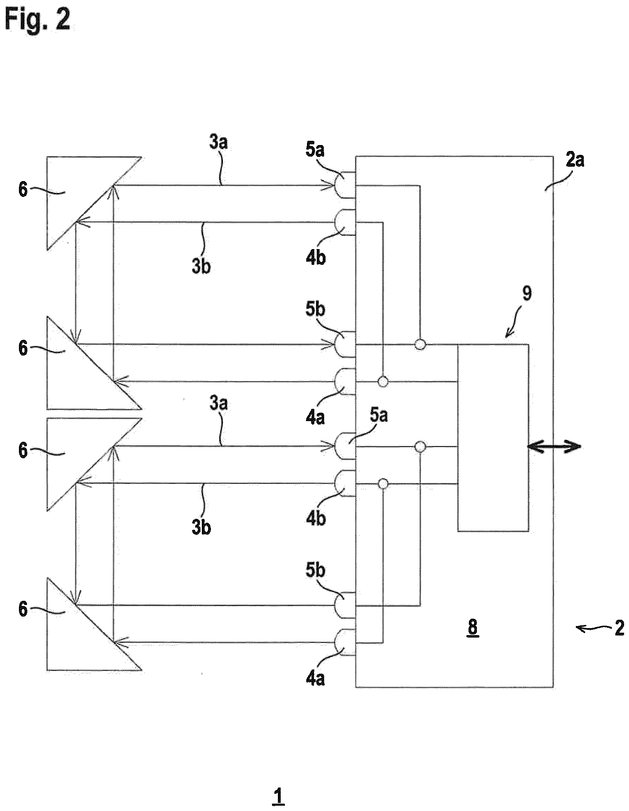

Mit dem oder jedem Transceiver 8 wird wenigstens ein redundanter optischer Pfad, bestehend aus zwei Lichtstrahlen 3a, 3b gebildet, wobei diese Lichtstrahlen 3a, 3b zumindest näherungsweise entlang derselben Lichtwege geführt sind, so dass vorteilhaft ein Objekt im Überwachungsbereich mit diesen Lichtstrahlen 3a, 3b mehrfach detektiert wird. In den Ausführungsbeispielen bilden jeweils zwei Lichtstrahlen 3a, 3b einen redundanten optischen Pfad. Durch den räumlichen Versatz der Empfangselemente 5a, 5b wird die Wahrscheinlichkeit von Beeinträchtigungen durch optische Störeinstrahlungen reduziert. Alle Strahlumlenkmittel können von baugleichen Elementen, insbesondere Eckspiegeln 6, gebildet sein (wie auch bei den Ausführungsbeispielen der Figuren 2 bis 4).

Bei dem Ausführungsbeispiel gemäß Figur 1 ist eine einkanalige Transceiver-Struktur mit nur einem Transceiver-Controller 9 vorgesehen, der zwei Paare von versetzt angeordneten Sendeelementen 4a, 4b und Empfangselementen 5a, 5b ansteuert. Entsprechend dem Versatz der Sendeelemente 4a, 4b und Empfangselemente 5a, 5b sind zwei versetzte Eckspiegel 6 vorgesehen, über welche die einen redundanten optischen Pfad bildenden Lichtstrahlen 3a, 3b geführt sind, die parallel zueinander im Überwachungsbereich verlaufen.

Figur 2 zeigt eine Erweiterung des Lichtgitters 1 auf eine mehrstrahlige Anordnung. Mit einem Transceiver-Controller 9 werden vier Paare von Sendeelementen 4a, 4b und Empfangselementen 5a, 5b gesteuert. Jeweils zwei Paaren von Sendeelementen 4a, 4b und Empfangselementen 5a, 5b sind einem Paar von Eckspiegeln 6 zugeordnet.

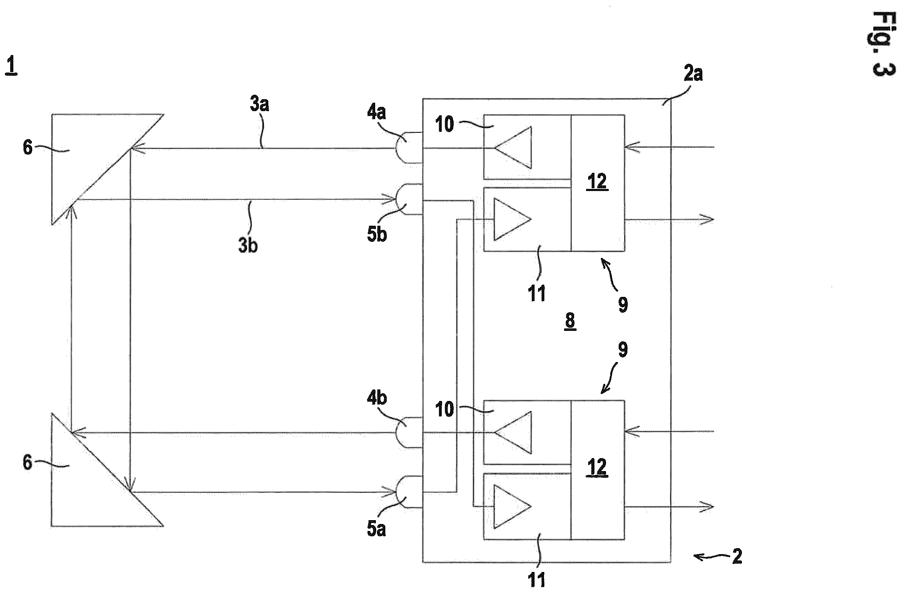

Figur 3 zeigt eine Erweiterung des Ausführungsbeispiels gemäß Figur 1 auf eine redundante, im vorliegenden Fall zweikanalige Transceiver-Struktur mit zwei identisch ausgebildeten Transceiver-Controllern 9, die jeweils ein Paar eines Sendeelements 4a, 4b und Empfangselements 5a, 5b steuern. Die Ausführungsform gemäß Figur 3 kann dahingehend modifiziert sein, dass die beiden Transceiver-Controller 9 gemeinsame Elektronikkomponenten 12 nutzen.

Bei der Ausführungsform gemäß Figur 3 dient jeder Transceiver-Controller 9 zur Steuerung 21 und Auswertung der Lichtstrahlen 3a, 3b des redundanten optischen Pfads. Diese Ausführungsform kann dahingehend erweitert werden, dass beide Transceiver-Controller 9 die Komponenten für beide der Lichtstrahlen 3a, 3b des optischen Pfades ansteuern bzw. auswerten.

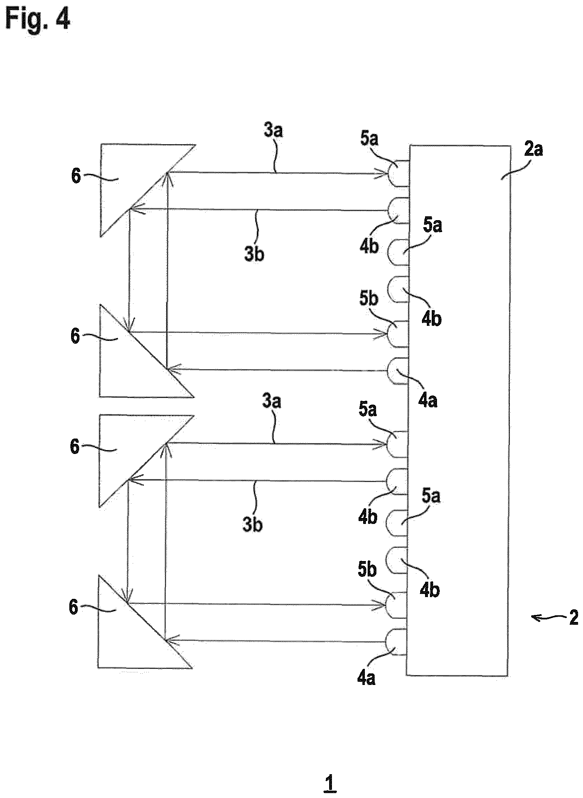

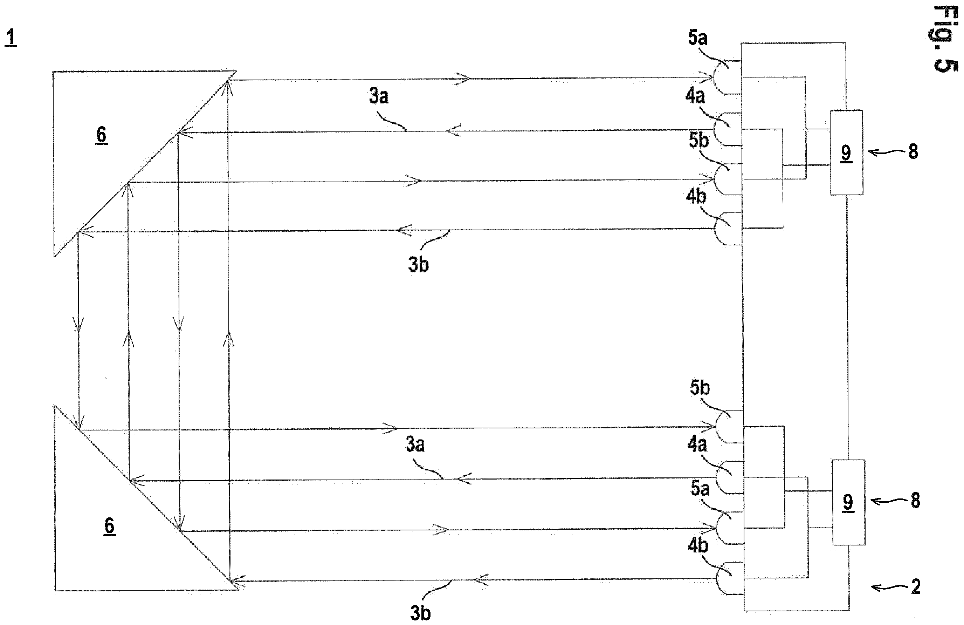

Figur 4 zeigt eine Variante der Ausführungsform gemäß Figur 2. Bei der Ausführungsform gemäß Figur 5 ist eine Anzahl von Paaren von Sendeelementen 4a, 4b und Empfangselementen 5a, 5b im Gehäuse 2a der Sende-/Empfangseinheit 2 installiert. Vorzugsweise erfolgt im Fertigungsprozess des Lichtgitters 1 eine Konfiguration des Lichtgitters 1 über die Firmware eines Rechnersystem des Lichtgitters 1 derart, dass je nach Applikation alle Paare von Sendeelementen 4a, 4b und Empfangselementen 5a, 5b oder, wie in Figur 5 dargestellt, nur ein Teil der Sendeelemente 4a, 4b und Empfangselemente 5a, 5b aktiviert wird. Nur die aktivierten Sendeelemente 4a, 4b senden Lichtstrahlen 3a, 3b, nur die aktivierten Empfangselemente 5a, 5b empfangen Lichtstrahlen 3a, 3b, wobei nur diesen aktivierten Sendeelementen 4a, 4b und Empfangselementen 5a, 5b Strahlumlenkmittel zugeordnet sind.

Figur 5 zeigt eine Erweiterung der Ausführungsform gemäß Figur 3 mit einer redundanten Anordnung von Transceivern 8. Der Transceiver-Controller 9 eines Transceivers 8 steuert jeweils zwei Paare von Sendeelementen 4a, 4b und Empfangselementen 5a, 5b, wobei die Lichtstrahlen 3a, 3b dieser Sendeelemente 4a, 4b auf einen der Eckspiegel 6 geführt sind. Diese Lichtstrahlen 3a, 3b werden jeweils zum anderen Eckspiegel 6 geführt und von dort zu zugeordneten Empfangselementen 5a, 5b geführt, die gleichzeitig mit den zugeordneten Sendeelementen 4a, 4b aktiviert sind. Damit können diese mehrfachen optische Pfade den gleichen Schutzbereich überwachen.

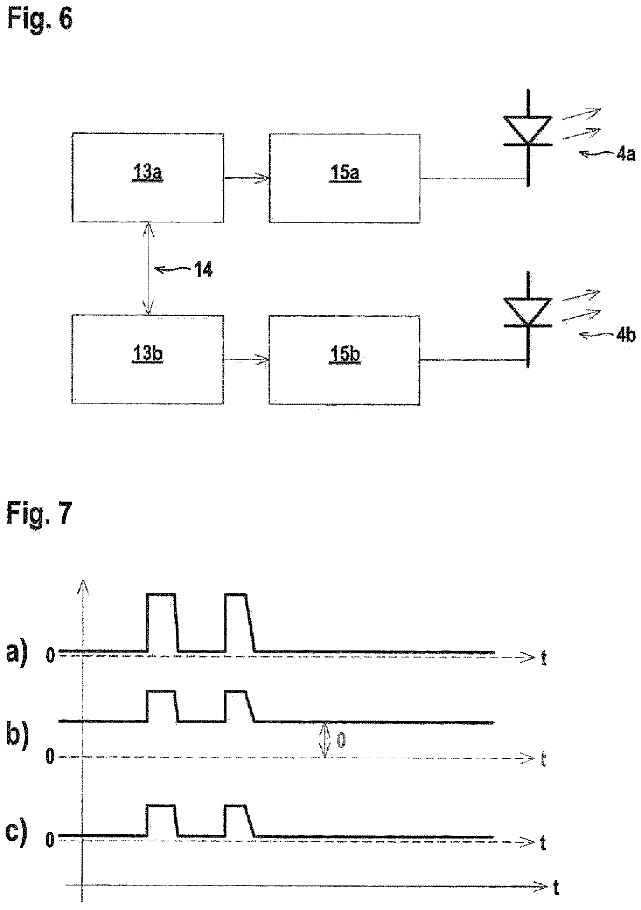

Figur 6 zeigt eine redundante Senderanordnung für das Lichtgitter 1 der erfindungsgemäßen Überwachungseinrichtung. Die Senderanordnung umfasst zwei Sendeelemente 4a 4b, die in Form von Leuchtdioden ausgebildet sind und mit einem Transceiver-Controller 9 eines Transceivers 8 gemäß den Ausführungsformen gemäß den Figuren 1 bis 5 angesteuert werden können. Mit den Lichtstrahlen 3a, 3b der Sendeelemente 4a, 4b wird ein redundanter optischer Pfad gebildet, entsprechend den Ausführungsformen der Figuren 1 bis 5.

Die Sendeelemente 4a, 4b werden parallel betrieben, wobei bei Ausfall eines Sendeelements 4a das andere Sendeelement 4b noch funktionsfähig bleibt, so dass das Lichtgitter 1 mit dem nur einen Sendeelement 4a, 4b weiterbetrieben werden kann, vorzugsweise in einem degradierten Betrieb.

Jedem Sendeelement 4a, 4b ist ein Signalgeber 13a, 13b zugeordnet. Diese sind miteinander synchronisiert, wie mit der bidirektionalen Datenverbindung 14 veranschaulicht. Zudem ist jedem Sendeelement 4a, 4b ein Treiber 15a, 15b vorgeordnet.

Bei Ausfall eines Signalgebers 13a, 13b (bedingt durch einen Schluss oder einer Unterbrechung) sendet das jeweilige Sendeelement 4a, 4b kein Licht mehr oder nur noch Gleichlicht. In beiden Fällen kann (zumindest für kurze Reichweiten, also bei hohen Signalpegeln) noch der geringe verbleibende Wechselanteil des Sendelichts im zugehörigen Empfangselement 5a, 5b detektiert werden, z.B. durch eine DC-Entkopplung oder einen Hochpass von zugeordneten Empfangselementen 5a, 5b.

Die Figuren 7a bis 7c zeigen zeitliche Verläufe von Lichtpegeln eines Sendeelements 4a, 4b der Senderanordnung gemäß Figur 6, wobei das Sendeelement 4a, 4b Sendelicht in Form von Lichtimpulsen emittiert.

Figur 7a zeigt die Lichtpegel im fehlerfreien Fall. Figur 7b zeigt die Lichtpegel, wenn ein Fehler eines Sendeelements 4a, 4b oder Treibers 15a, 15b in Form eines Stuck at On-Fehlers, wenn das Sendeelement 4a, 4b immer an ist, vorliegt. Figur 7c zeigt die Lichtpegel, wenn ein Fehler eines Sendeelements 4a, 4b oder Treibers 15a, 15b in Form eines Stuck at Off-Fehlers, wenn das Sendeelement 4a, 4b immer aus ist, vorliegt.

In den dargestellten Fehlerfällen können die Lichtsignale des Sendeelements 4a, 4b durch Erfassen des Offsets O der Lichtpegel jeweils noch ausgewertet werden, was durch eine DC-(Gleichspannungs) Entkopplung, wie z.B. einen Kondensator 19a, 19b am zugehörigen Empfangselement 5a, 5b erreicht werden kann. Die Signalanteile sind im Fehlerfall zwar kleiner als im fehlerfreien Fall, jedoch noch nachweisbar.

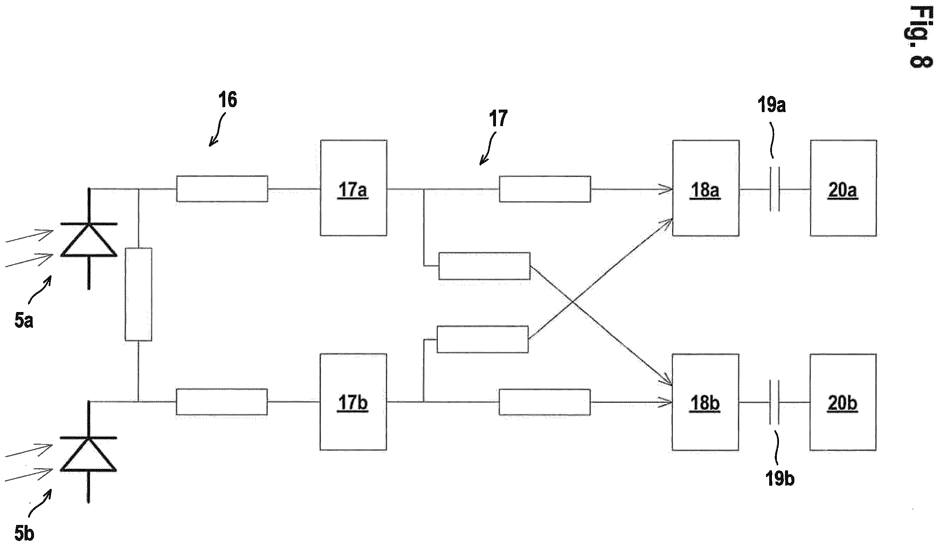

Figur 8 zeigt eine redundante Empfängeranordnung zur Ausbildung eines redundanten optischen Pfads gemäß den Ausführungsformen der Figuren 1 bis 5. Die Empfängeranordnung umfasst zwei Empfangselemente 5a, 5b in Form von Fotodioden. Diese Empfangselemente 5a, 5b sind z.B. über ein Widerstandsnetzwerk 16 verbunden.

Jedem Empfangselement 5a, 5b ist ein Verstärker 17a, 17b zur Verstärkung der Ausgangssignale, d.h. Empfangssignale des jeweiligen Empfangselements 5a, 5b, zugeordnet.

Den Verstärkern 17a, 17b kann ein Summiernetzwerk 17 angeordnet sein. Alternativ können Summierschaltungen 18a, 18b vorgesehen sein. In Figur 8 sind beide Alternativen dargestellt.

Die Summierschaltungen 18a, 18b sind jeweils über einen Kondensator 19a, 19b, der eine Gleichspannungsentkopplung bildet, an einen Auswertekanal 20a, 20b der mehrkanaligen Auswerteeinheit 7 angeschlossen, die von verschiedenen, sich gegenseitig kontrollierenden Rechnereinheiten gebildet sein kann.

Die Gleichspannungsentkopplung kann auch durch andere Maßnahmen erfolgen, z.B. mit einem Hochpass oder durch Kompensation/Ausregelung des Gleichanteils durch das tiefpassgefilterte Ausganssignal, wobei der Tiefpass nur noch die gemittelten Gleichanteile repräsentiert.

Dadurch ist ein kompletter Betrieb weiterhin möglich, wenn die Reichweite durch den Abstand zwischen Sende-/Empfangseinheit 2 und Strahlumlenkmittel noch einen Betrieb mit geminderten Signalpegeln ermöglicht.

Im fehlerfreien Fall erfolgt die Objekterfassung mit beiden Empfangselementen 5a, 5b und beiden Auswertekanälen 20a, 20b. Liegt in einem Auswertekanal 20a, 20b ein Fehler vor, ist der andere Auswertekanal 20a, 20b noch funktionsfähig und kann alleine die Überwachungsfunktion des Lichtgitters 1 übernehmen. Dabei ist insbesondere ein degradierter Betrieb des Lichtgitters 1 möglich, der für eine vorgegebene Zeit aufrechterhalten wird.

Durch das Summiernetzwerk 17 kann im fehlerfreien Betrieb das Signal Rauschverhältnis gegenüber einer einkanaligen Version verbessert werden, da das Nutzsignal vollständig (phasengleich) addiert wird, wogegen die Rauschanteile wegen unterschiedlicher Rauschquellen unterschiedliche Phasenlagen haben und sich deshalb nur leistungsmäßig addieren. Voraussetzung dafür ist ein Nutzsignal mit gleicher Signalcodierung und Phasenlage.

Die Figuren 9a bis 9c zeigen zeitliche Verläufe von Signalpegeln eines Empfangselements 5a, 5b der Empfängeranordnung gemäß Figur 8, wobei das Empfangselement 5a, 5b Sendelicht von einem der Sendeelemente 4a, 4b (Figur 6) empfängt.

Figur 9a zeigt die Signalpegel im fehlerfreien Fall. Figur 9b zeigt die Singalpegel, wenn ein Fehler eines Empfangselements 5a, 5b in Form eines Stuck at On-Fehlers, wenn das Empfangselement 5a, 5b immer an ist, vorliegt. Figur 9c zeigt die Signalpegel, wenn ein Fehler eines Empfangselements 5a, 5b in Form eines Stuck at Off-Fehlers, wenn das Empfangselement 5a, 5b immer aus ist, vorliegt.

In den dargestellten Fehlerfällen können die Signalanteile der Signale des Empfangselements 5a, 5b durch Erfassen des Offsets SO der Signalpegel jeweils noch ausgewertet werden. Die Signalanteile sind im Fehlerfall zwar kleiner als im fehlerfreien Fall, jedoch noch nachweisbar.

Figur 10 zeigt eine zweikanalige Struktur einer Auswerteeinheit 7, die an eine Steuerung 21 der externen Einheit angeschlossen ist.

Von dem Sendeelement 4a und dem Empfangselement 5a wird ein erster Sensorinput 22a gebildet, der in einem ersten Auswertekanal 20a ausgewertet wird. Von dem Sendeelement 4b und Empfangselement 5b wird ein zweiter Sensorinput 22b gebildet, der in einem zweiten Auswertekanal 20b ausgewertet wird. Die Auswertekanäle 20a, 20b sind von Rechnerstrukturen, insbesondere in Form von Logikeinheiten, die auf Rechnerstrukturen implementiert sind, gebildet. Die Sendeelemente 4a, 4b und die Empfangselemente 5a, 5b bilden redundante optische Pfade, wie in den Figuren 1 bis 5 dargestellt. Generell kann jedem Auswertekanal 20a, 20b jeweils der gesamte Sensorinput 22a und 22b zugeführt werden. Insbesondere dann ist es vorteilhaft, wenn sich die Auswertekanäle gegenseitig über eine nicht dargestellte Datenleitung kontrollieren.

In jedem Auswertekanal 20a, 20b wird abhängig von Empfangssignalen der Empfangselemente 5a, 5b ein binäres Schaltsignal 23a, 23b generiert, das über einen Schaltausgang 24a, 24b an die Steuerung 21 ausgegeben wird, wodurch die externe Einheit gesteuert wird. Die Schaltausgänge werden durch Testmittel 25, 26a, 26b getestet und sind damit fehlersicher. Erste Testmittel 25 führen Selbsttests zur Erfassung von Totalausfällen durch. Weitere Testmittel 26a, 26b können Selbsttests, Speichertests, CPU-Tests und dergleichen, durchführen. Auch können entsprechende Fehlerkontrollmittel in den einzelnen Auswertekanälen 20a, 20b vorgesehen sein. Zudem erfolgt eine gegenseitige Kontrolle der Schaltausgänge, wie mit der bidirektionalen Datenverbindung 27 veranschaulicht.

In den Testmitteln 26a, 26b können Fehlersignale 28a, 28b generiert werden, die an die Steuerung 21 ausgegeben werden. Mit diesen Fehlersignalen 28a, 28b können der Steuerung 21 auftretende Fehler signalisiert werden.

Die Funktionsweise der Auswerteeinheit 7 ist derart, dass dann, wenn im fehlerfreien Fall in den Auswertekanälen 20a, 20b ein freier Überwachungsbereich detektiert wird, jeder Auswertekanal 20a, 20b ein Schaltsignal 23a, 23b derart generiert, dass der jeweilige Schaltausgang 24a, 24b eingeschaltet wird. Durch die beiden eingeschalteten Schaltausgänge 24a, 24b wird der Betrieb der externen Einheit freigegeben.

Wird in den Auswertekanälen 20a, 20b ein Objekteingriff im Überwachungsbereich festgestellt, werden die Schaltausgänge 24a, 24b abgeschaltet, wodurch die externe Einheit stillgesetzt wird.

Wird in einem Auswertekanal 20a oder 20b ein Fehler festgestellt, schaltet der zugehörige Schaltausgang 24a oder 24b ab. Dies signalisiert der Steuerung 21, dass nur noch der andere Auswertekanal 20b oder 20a intakt ist, wodurch dieser Auswertekanal 20a oder 20b allein die Überwachungsfunktion des Lichtgitters 1 übernimmt. Dann wird die Steuerung 21 in einem degradierten Betrieb betrieben, der vorzugsweise nur für eine vorgegebene Zeit aufrechterhalten wird.

Bei Feststellen eines Totalausfalls in der Auswerteeinheit 7 schalten beide Schaltausgänge 24a, 24b ab und die externe Einheit wird stillgesetzt.

Wird in einem Schaltausgang 24a oder 24b ein Fehler festgestellt, schaltet nicht nur dieser ab, sondern auch der andere Schaltausgang 24b oder 24a. In diesem Fall ist kein degradierter Betrieb der externen Einheit möglich, vielmehr wird dieser abgeschaltet.

### Bezugszeichenliste

- (1): Lichtgitter
- (2): Sende-/Empfangseinheit
- (2a): Gehäuse
- (3a-b): Lichtstrahl
- (4a-b): Sendeelement
- (5a-b): Empfangselement
- (6): Eckspiegel
- (7): Auswerteeinheit
- (8): Transceiver
- (9): Transceiver-Controller
- (10): Sende-Controller
- (11): Empfangs-Controller
- (12): Elektronikkomponente
- (13a-b): Signalgeber
- (14): Datenverbindung
- (15a-b): Treiber
- (16): Widerstandsnetzwerk
- (17): Summiernetzwerk
- (17a-b): Verstärker
- (18a-b): Summierschaltung
- (19a-b): Kondensator
- (20a-b): Auswertekanal
- (21): Steuerung
- (22a-b): Sensorinput
- (23a-b): Schaltsignal
- (24a-b): Schaltausgang
- (25): Testmittel
- (26a-b): Testmittel
- (27): Datenverbindung
- (28a-b): Fehlersignal

- (O): Offset
- (SO): Offset

## Patentansprüche

1. Überwachungseinrichtung mit einem Lichtgitter (1) zur Erfassung von Objekten in einem Überwachungsbereich mit einer Sende-/Empfangseinheit (2) an einem Rand des Überwachungsbereichs und Strahlumlenkmitteln am gegenüberliegenden Rand des Überwachungsbereichs, wobei die Sende-/Empfangseinheit (2) wenigstens einen Transceiver (8) aufweist, der zum Senden und Empfangen von Lichtstrahlen (3a, 3b) ausgebildet ist, wobei bei freiem Überwachungsbereich die Lichtstrahlen (3a, 3b) auf die Strahlumlenkmittel treffen und von dort zurück zum Transceiver (8) geführt sind, und wobei bei einem Objekteingriff im Überwachungsbereich eine Strahlunterbrechung von Lichtstrahlen (3a, 3b) erfolgt, und mit einer Auswerteeinheit (7), in welcher in Abhängigkeit von Empfangssignalen des Transceivers (8) ein binäres Schaltsignal (23a, 23b) generiert wird, dessen Schaltzustände angeben, ob ein Objekt im Überwachungsbereich vorhanden ist, wobei mit dem wenigstens einen Transceiver (8) redundante, von Lichtstrahlen (3a, 3b) gebildete optische Pfade im Überwachungsbereich gebildet werden, **dadurch gekennzeichnet, dass** der wenigstens eine Transceiver (8) einen Transceiver-Controller (9) mit einem wenigstens zwei Sendeelemente (4a, 4b) steuernden Sende-Controller (10) und mit einem wenigstens zwei Empfangselemente (5a, 5b) steuernden Empfangs-Controller (11) aufweist, wobei mit von den Sendeelementen (4a, 4b) emittierten Lichtstrahlen (3a, 3b) unterschiedliche optische Pfade generiert werden, dass der wenigstens eine Transceiver (8) mit seinem Sende-Controller (10) mehrere Paare von Empfangselemente (5a, 5b) ansteuert und mit seinem Empfangs-Controller (11) mehrere Paare von Empfangselementen (5a, 5b) ansteuert, wobei die Lichtstrahlen (3a, 3b) der Sendeelemente (4a, 4b) eine mehrstrahlige Anordnung mit redundanten optischen Pfaden ausbilden, dass die Lichtstrahlen (3a, 3b) jeweils eines Paares von Sendeelementen (4a, 4b) und Empfangselementen (5a, 5b) über dieselben Strahlumlenkmittel abgelenkt werden und redundante optische Pfade ausbilden und dass die Lichtstrahlen (3a, 3b) unterschiedlicher Paare von Sendeelementen (4a, 4b) und Empfangselementen (5a, 5b) über unterschiedliche, räumlich versetzte Strahlumlenkmittel abgelenkt werden und verschiedene, räumlich versetzte optische Pfade ausbilden.

2. Überwachungseinrichtung nach Anspruch 1, **dadurch gekennzeichnet, dass** das Lichtgitter (1) ein Sicherheitslichtgitter ist.

3. Überwachungseinrichtung nach einem der Ansprüche 1 oder 2, **dadurch gekennzeichnet, dass** die von den beiden Sendeelementen (4a, 4b) emittierten Lichtstrahlen (3a, 3b) bei freiem Überwachungsbereich über dieselben Strahlumlenkmittel zu dem jeweils zugeordneten Empfangselement (5a, 5b) geführt sind.

4. Überwachungseinrichtung nach einem der Ansprüche 1 bis 3, **dadurch gekennzeichnet, dass** die Sendeelemente (4a, 4b) und Empfangselemente (5a, 5b) jeweils räumlich versetzt zueinander angeordnet sind.

5. Überwachungseinrichtung nach einem der Ansprüche 1 bis 4, **dadurch gekennzeichnet, dass** die Lichtstrahlen (3a, 3b) jedes Sendeelements (4a, 4b) über zwei Strahlumlenkmittel so abgelenkt werden, dass die auf die Strahlumlenkmittel zulaufenden Lichtstrahlen (3a, 3b) und die an den Strahlumlenkmitteln reflektierten Lichtstrahlen (3a, 3b) zumindest näherungsweise parallel zueinander verlaufen.

6. Überwachungseinrichtung nach einem der Ansprüche 1 bis 5, **dadurch gekennzeichnet, dass** Paare von Sendeelementen (4a, 4b) und Empfangselementen (5a, 5b) selektiv aktivierbar sind.

7. Überwachungseinrichtung nach Anspruch 6, **dadurch gekennzeichnet, dass** nur aktivierte Sendeelemente (4a, 4b) Lichtstrahlen (3a, 3b) emittieren, die bei freiem Überwachungsbereichen über zugeordnete Strahlumlenkmittel geführt sind.

8. Überwachungseinrichtung nach einem der Ansprüche 1 bis 7, **dadurch gekennzeichnet, dass** die Strahlumlenkmittel von Prismen, Eckspiegeln (6) oder Lichtleitern gebildet sind.

9. Überwachungseinrichtung nach Anspruch 8, **dadurch gekennzeichnet, dass** jeweils ein Prismenpaar oder Eckspiegelpaar über eine Lichtleitstrecke verbunden ist.

10. Überwachungseinrichtung nach einem der Ansprüche 1 bis 9, **dadurch gekennzeichnet, dass** das Lichtgitter (1) eine redundante Transceiver-Anordnung aufweist.

11. Überwachungseinrichtung nach Anspruch 10, **dadurch gekennzeichnet, dass** Sende-Controller (10) sowie Empfangs-Controller (11) der redundanten Transceiver-Anordnung unterschiedlichen optischen Pfaden zugeordnet sind.

12. Überwachungseinrichtung nach einem der Ansprüche 1 bis 11, **dadurch gekennzeichnet, dass** die Auswerteeinheit (7) wenigstens zwei Auswertekanäle (20a, 20b) aufweist, in welchen unabhängig voneinander das Schaltsignal (23a, 23b) generiert wird.

13. Überwachungseinrichtung nach Anspruch 12, **dadurch gekennzeichnet, dass** jeder Auswertekanal (20a, 20b) einen Schaltausgang (24a, 24b) aufweist, über welchen das Schaltsignal (23a, 23b) an eine externe Einheit ausgegeben wird, wobei bei abgeschalteten Schaltausgängen (24a, 24b) die externe Einheit stillgesetzt wird und wobei bei eingeschalteten Schaltzugängen der Betrieb der externen Einheit uneingeschränkt freigegeben wird.

14. Überwachungseinrichtung nach einem der Ansprüche 12 oder 13, **dadurch gekennzeichnet, dass** in jedem Auswertekanal (20a, 20b) Fehlerkontrollmittel zur Aufdeckung von Fehlern in diesem Auswertekanal (20a, 20b) und zur gegenseitigen Kontrolle des Auswertekanals (20a, 20b) vorgesehen sind.

15. Überwachungseinrichtung nach einem der Ansprüche 13 und 14, **dadurch gekennzeichnet, dass** bei Aufdeckung eines Fehlers in einem Auswertekanal (20a, 20b) der Schaltausgang (24a, 24b) dieses Auswertekanals (20a, 20b) abgeschaltet wird und die externe Einheit mit dem wenigstens einen verbleibenden intakten Auswertekanal (20a, 20b) in einem degradierten Betrieb weiter betrieben wird, wenn dessen Schaltausgang (24a, 24b) eingeschaltet ist.

16. Überwachungseinrichtung nach Anspruch 15, **dadurch gekennzeichnet, dass** der degradierte Betrieb nur für eine vorgegebene Zeitdauer aufrechterhalten wird.

17. Überwachungseinrichtung nach einem der Ansprüche 14 bis 16, **dadurch gekennzeichnet, dass** die Fehlerkontrollmittel zur Aufdeckung von Fehlern der Schaltausgänge (24a, 24b) ausgebildet sind, und dass bei einer Aufdeckung eines Fehlers des Schaltausgangs (24a, 24b) eines Auswertekanals (20a, 20b) der wenigstens eine weitere Schaltausgang (24a, 24b) abgeschaltet wird.

18. Überwachungseinrichtung nach einem der Ansprüche 14 bis 16, **dadurch gekennzeichnet, dass** bei Feststellen eines Totalausfalls der Auswertekanal (20a, 20b) alle Schaltausgänge (24a, 24b) abgeschaltet werden.

19. Überwachungseinrichtung nach einem der Ansprüche 12 bis 18, **dadurch gekennzeichnet, dass** den Auswertekanälen (20a, 20b) Sendeelemente (4a, 4b) und Empfangselemente (5a, 5b) unterschiedlicher optischer Pfade zugeordnet sind.

20. Überwachungseinrichtung nach Anspruch 19, **dadurch gekennzeichnet, dass** die Sendeelemente (4a, 4b) und die Empfangselemente (5a, 5b) eines redundanten optischen Pfads parallel betrieben sind, und dass bei Ausfall eines Sendeelements (4a, 4b) oder Empfangselements (5a, 5b) das wenigstens ein weiteres Sendeelement (4a, 4b) oder Empfangselement (5a, 5b) des optischen Pfads weiter betrieben wird.

21. Überwachungseinrichtung nach Anspruch 20, **dadurch gekennzeichnet, dass** die Ausgänge der Empfangselemente (5a, 5b) eines redundanten optischen Pfads über ein Summiernetzwerk (17) verbunden sind.

22. Verfahren zum Betrieb einer Überwachungseinrichtung zur Erfassung von Objekten in einem Überwachungsbereich mittels eines Lichtgitters (1) mit einer Sende-/Empfangseinheit (2) an einem Rand des Überwachungsbereichs und Strahlumlenkmitteln am gegenüberliegenden Rand des Überwachungsbereichs, wobei die Sende-/Empfangseinheit (2) wenigstens einen Transceiver (8) aufweist, der zum Senden und Empfangen von Lichtstrahlen (3a, 3b) ausgebildet ist, wobei bei freiem Überwachungsbereich die Lichtstrahlen (3a, 3b) auf die Strahlumlenkmittel treffen und von dort zurück zum Transceiver (8) geführt sind, und wobei bei einem Objekteingriff im Überwachungsbereich eine Strahlunterbrechung von Lichtstrahlen (3a, 3b) erfolgt, und mit einer Auswerteeinheit (7), in welcher in Abhängigkeit von Empfangssignalen des Transceivers (8) ein binäres Schaltsignal (23a, 23b) generiert wird, dessen Schaltzustände angeben, ob ein Objekt im Überwachungsbereich vorhanden ist, wobei mit dem wenigstens einen Transceiver (8) redundante, von Lichtstrahlen (3a, 3b) gebildete optische Pfade im Überwachungsbereich gebildet werden, **dadurch gekennzeichnet, dass** der wenigstens eine Transceiver (8) einen Transceiver-Controller (9) mit einem wenigstens zwei Sendeelemente (4a, 4b) steuernden Sende-Controller (10) und mit einem wenigstens zwei Empfangselemente (5a, 5b) steuernden Empfangs-Controller (11) aufweist, wobei mit von den Sendeelementen (4a, 4b) emittierten Lichtstrahlen (3a, 3b) unterschiedliche optische Pfade generiert werden, dass der wenigstens eine Transceiver (8) mit seinem Sende-Controller (10) mehrere Paare von Empfangselemente (5a, 5b) ansteuert und mit seinem Empfangs-Controller (11) mehrere Paare von Empfangselementen (5a, 5b) ansteuert, wobei die Lichtstrahlen (3a, 3b) der Sendeelemente (4a, 4b) eine mehrstrahlige Anordnung mit redundanten optischen Pfaden ausbilden, dass die Lichtstrahlen (3a, 3b) jeweils eines Paares von Sendeelementen (4a, 4b) und Empfangselementen (5a, 5b) über dieselben Strahlumlenkmittel abgelenkt werden und redundante optische Pfade ausbilden und dass die Lichtstrahlen (3a, 3b) unterschiedlicher Paare von Sendeelementen (4a, 4b) und Empfangselementen (5a, 5b) über unterschiedliche, räumlich versetzte Strahlumlenkmittel abgelenkt werden und verschiedene, räumlich versetzte optische Pfade ausbilden.

## Claims

1. A monitoring device with a light grid (1) for detecting objects in a monitoring area with a transmitter/receiver unit (2) at one edge of the monitoring area and beam deflection means at the opposite edge of the monitoring area,
wherein the transmitter/receiver unit (2) has at least one transceiver (8) which is designed to transmit and receive light beams (3a, 3b),
the light beams (3a, 3b) striking the beam deflecting means and being guided from there back to the transceiver (8), and
in which a beam of light beams (3a, 3b) is interrupted when an object is engaged in the monitoring area, and with an evaluation unit (7) in which a binary switching signal (23a, 23b) is generated as a function of received signals of the transceiver (8), the switching states of which indicate whether an object is present in the monitoring area,
wherein redundant optical paths formed by light beams (3a, 3b) are formed in the monitoring area with said at least one transceiver (8),
**characterised in that** said at least one transceiver (8) has a transceiver controller (9) with a transmit controller (10) controlling at least two transmit elements (4a, 4b) and with a receive controller (11) controlling at least two receive elements (5a, 5b), wherein different optical paths are generated with light beams (3a, 3b) emitted by the transmitting elements (4a, 4b), **in that** said at least one transceiver (8) controls several pairs of receiving elements (5a, 5b) with its transmitting controller (10) and controls several pairs of receiving elements (5a, 5b) with its receiving controller (11),
wherein the light beams (3a, 3b) of the transmitting elements (4a, 4b) form a multibeam arrangement with redundant optical paths, **in that** the light beams (3a, 3b) of a respective pair of transmitting elements (4a, 4b) and receiving elements (5a, 5b) are deflected via the same beam deflection means and form redundant optical paths and that the light beams (3a, 3b) of different pairs of transmitting elements (4a, 4b) and receiving elements (5a, 5b) are deflected via different, spatially offset beam deflection means and form different, spatially offset optical paths.

2. A monitoring device according to claim 1, **characterised in that** the light grid (1) is a safety light grid.

3. A monitoring device according to one of claims 1 or 2, **characterised in that** the light beams (3a, 3b) emitted by the two transmitting elements (4a, 4b) are guided to the respectively assigned receiving element (5a, 5b) via the same beam deflection means when the monitoring area is free.

4. A monitoring device according to one of claims 1 to 3, **characterised in that** the transmitting elements (4a, 4b) and receiving elements (5a, 5b) are each arranged spatially offset from one another.

5. A monitoring device according to one of claims 1 to 4, **characterised in that** the light beams (3a, 3b) of each transmitting element (4a, 4b) are deflected via two beam deflecting means in such a way that the light beams (3a, 3b) approaching the beam deflecting means and the light beams (3a, 3b) reflected at the beam deflecting means run at least approximately parallel to one another.

6. A monitoring device according to one of claims 1 to 5, **characterised in that** pairs of transmitting elements (4a, 4b) and receiving elements (5a, 5b) can be selectively activated.

7. A monitoring device according to claim 6, **characterised in that** only activated transmitting elements (4a, 4b) emit light beams (3a, 3b) which are guided via assigned beam deflection means when the monitoring areas are free.

8. A monitoring device according to one of claims 1 to 7, **characterised in that** the beam deflection means are formed by prisms, corner mirrors (6) or light guides.

9. A monitoring device according to claim 8, **characterised in that** a pair of prisms or a pair of corner mirrors is connected via a light guide.

10. A monitoring device according to one of claims 1 to 9, **characterised in that** the light grid (1) has a redundant transceiver arrangement.

11. A monitoring device according to claim 10, **characterised in that** the transmit controller (10) and receive controller (11) of the redundant transceiver arrangement are assigned to different optical paths.

12. A monitoring device according to one of claims 1 to 11, **characterised in that** the evaluation unit (7) has at least two evaluation channels (20a, 20b) in which the switching signal (23a, 23b) is generated independently of one another.

13. A monitoring device according to claim 12, **characterised in that** each evaluation channel (20a, 20b) has a switching output (24a, 24b) via which the switching signal (23a, 23b) is output to an external unit, the external unit being shut down when the switching outputs (24a, 24b) are switched off and the operation of the external unit being enabled without restriction when the switching outputs are switched on.

14. A monitoring device according to one of claims 12 or 13, **characterised in that** error control means are provided in each evaluation channel (20a, 20b) for detecting errors in this evaluation channel (20a, 20b) and for mutual control of the evaluation channel (20a, 20b).

15. A monitoring device according to one of claims 13 and 14, **characterised in that** when a fault is detected in an evaluation channel (20a, 20b), the switching output (24a, 24b) of this evaluation channel (20a, 20b) is switched off and the external unit with said at least one remaining intact evaluation channel (20a, 20b) continues to be operated in a degraded mode when its switching output (24a, 24b) is switched on.

16. A monitoring device according to claim 15, **characterised in that** the degraded operation is only maintained for a predetermined period of time.

17. A monitoring device according to one of claims 14 to 16, **characterised in that** the fault monitoring means are designed to detect faults in the switching outputs (24a, 24b), and **in that** when a fault in the switching output (24a, 24b) of an evaluation channel (20a, 20b) is detected, said at least one further switching output (24a, 24b) is switched off.

18. A monitoring device according to one of claims 14 to 16, **characterised in that** all switching outputs (24a, 24b) are switched off when a total failure of the evaluation channel (20a, 20b) is detected.

19. A monitoring device according to one of claims 12 to 18, **characterised in that** transmitting elements (4a, 4b) and receiving elements (5a, 5b) of different optical paths are assigned to the evaluation channels (20a, 20b).

20. A monitoring device according to claim 19, **characterised in that** the transmitting elements (4a, 4b) and the receiving elements (5a, 5b) of a redundant optical path are operated in parallel, and **in that** if one transmitting element (4a, 4b) or receiving element (5a, 5b) fails, said at least one further transmitting element (4a, 4b) or receiving element (5a, 5b) of the optical path continues to be operated.

21. A monitoring device according to claim 20, **characterised in that** the outputs of the receiving elements (5a, 5b) of a redundant optical path are connected via a summing network (17).

22. A method for operating a monitoring device for detecting objects in a monitoring area by means of a light grid (1) with a transmitter/receiver unit (2) at one edge of the monitoring area and beam deflecting means at the opposite edge of the monitoring area,
wherein the transmitter/receiver unit (2) has at least one transceiver (8) which is designed to transmit and receive light beams (3a, 3b), wherein, when the monitoring area is free, the light beams (3a, 3b) strike the beam deflection means and are guided from there back to the transceiver (8), and
in which a beam interruption of light beams (3a, 3b) takes place when an object is engaged in the monitoring area, and with an evaluation unit (7) in which a binary switching signal (23a, 23b) is generated as a function of received signals of the transceiver (8), the switching states of which indicate whether an object is present in the monitoring area,
wherein redundant optical paths formed by light beams (3a, 3b) are formed in the monitoring area with said at least one transceiver (8),
**characterised in that** said at least one transceiver (8) has a transceiver controller (9) with a transmit controller (10) controlling at least two transmit elements (4a, 4b) and with a receive controller (11) controlling at least two receive elements (5a, 5b),
wherein different optical paths are generated with light beams (3a, 3b) emitted by the transmitting elements (4a, 4b), **in that** said at least one transceiver (8) controls several pairs of receiving elements (5a, 5b) with its transmitting controller (10) and controls several pairs of receiving elements (5a, 5b) with its receiving controller (11),
wherein the light beams (3a, 3b) of the transmitting elements (4a, 4b) form a multibeam arrangement with redundant optical paths, **in that** the light beams (3a, 3b) of a respective pair of transmitting elements (4a, 4b) and receiving elements (5a, 5b) are deflected via the same beam deflection means and form redundant optical paths and that the light beams (3a, 3b) of different pairs of transmitting elements (4a, 4b) and receiving elements (5a, 5b) are deflected via different, spatially offset beam deflection means and form different, spatially offset optical paths.

## Revendications

1. Dispositif de surveillance avec une grille lumineuse (1) pour détecter des objets dans une zone de surveillance avec une unité émettrice/réceptrice (2) à un bord de la zone de surveillance et des moyens de déviation du faisceau au bord opposé de la zone de surveillance,
l'unité émettrice/réceptrice (2) comporte au moins un émetteur-récepteur (8) conçu pour transmettre et recevoir des faisceaux lumineux (3a, 3b),
les faisceaux lumineux (3a, 3b) frappent les moyens de déviation des faisceaux et sont guidés de là vers l'émetteur-récepteur (8), et
dans lequel un faisceau de rayons lumineux (3a, 3b) est interrompu lorsqu'un objet est engagé dans la zone de surveillance, et avec une unité d'évaluation (7) dans laquelle un signal de commutation binaire (23a, 23b) est généré en fonction des signaux reçus de l'émetteur-récepteur (8), dont les états de commutation indiquent si un objet est présent ou non dans la zone de surveillance,
dans lequel des chemins optiques redondants formés par des faisceaux lumineux (3a, 3b) sont formés dans la zone de surveillance avec ledit au moins un émetteur-récepteur (8),
**caractérisé par le fait que** ledit au moins un émetteur-récepteur (8) comporte un dispositif de commande d'émetteur-récepteur (9) avec un dispositif de commande d'émission (10) commandant au moins deux éléments d'émission (4a, 4b) et avec un dispositif de commande de réception (11) commandant au moins deux éléments de réception (5a, 5b),
dans lequel différents chemins optiques sont générés avec les faisceaux lumineux (3a, 3b) émis par les éléments de transmission (4a, 4b), en ce sens que ledit au moins un émetteur-récepteur (8) commande plusieurs paires d'éléments de réception (5a, 5b) avec son dispositif de commande de transmission (10) et commande plusieurs paires d'éléments de réception (5a, 5b) avec son dispositif de commande de réception (11),
dans lequel les faisceaux lumineux (3a, 3b) des éléments de transmission (4a, 4b) forment un arrangement à faisceaux multiples avec des chemins optiques redondants, en ce sens que les faisceaux lumineux (3a, 3b) d'une paire respective d'éléments de transmission (4a, 4b) et d'éléments de réception (5a, 5b) sont déviés par le même moyen de déviation de faisceau et forment des chemins optiques redondants, et que les faisceaux lumineux (3a, 3b) de différentes paires d'éléments de transmission (4a, 4b) et d'éléments de réception (5a, 5b) sont déviés par des moyens de déviation de faisceau différents, décalés dans l'espace, et forment des chemins optiques différents, décalés dans l'espace.

2. Dispositif de surveillance selon la revendication 1, **caractérisé par le fait que** la grille lumineuse (1) est une grille lumineuse de sécurité.

3. Dispositif de surveillance selon l'une des revendications 1 ou 2, **caractérisé par le fait que** les faisceaux lumineux (3a, 3b) émis par les deux éléments de transmission (4a, 4b) sont guidés vers l'élément de réception (5a, 5b) correspondant par le même moyen de déviation des faisceaux lorsque la zone de surveillance est libre.

4. Dispositif de surveillance selon l'une des revendications 1 à 3, **caractérisé par le fait que** les éléments de transmission (4a, 4b) et les éléments de réception (5a, 5b) sont chacun disposés de manière décalée dans l'espace.

5. Dispositif de surveillance selon l'une des revendications 1 à 4, **caractérisé par le fait que** les faisceaux lumineux (3a, 3b) de chaque élément de transmission (4a, 4b) sont déviés par deux moyens de déviation de faisceau de telle sorte que les faisceaux lumineux (3a, 3b) approchant les moyens de déviation de faisceau et les faisceaux lumineux (3a, 3b) réfléchis sur les moyens de déviation de faisceau sont au moins approximativement parallèles les uns aux autres.

6. Dispositif de surveillance selon l'une des revendications 1 à 5, **caractérisé par le fait que** les paires d'éléments de transmission (4a, 4b) et d'éléments de réception (5a, 5b) peuvent être activées de manière sélective.

7. Dispositif de surveillance selon la revendication 6, **caractérisé par le fait que** seuls les éléments de transmission activés (4a, 4b) émettent des faisceaux lumineux (3a, 3b) qui sont guidés par des moyens de déviation des faisceaux assignés lorsque les zones de surveillance sont libres.

8. Dispositif de surveillance selon l'une des revendications 1 à 7, **caractérisé par le fait que** les moyens de déviation du faisceau sont constitués de prismes, de miroirs d'angle (6) ou de guides de lumière.

9. Dispositif de surveillance selon la revendication 8, **caractérisé par le fait qu'**une paire de prismes ou une paire de miroirs d'angle est reliée par un guide de lumière.

10. Dispositif de surveillance selon l'une des revendications 1 à 9, **caractérisé par le fait que** la grille lumineuse (1) est équipée d'un émetteur-récepteur redondant.

11. Dispositif de surveillance selon la revendication 10, **caractérisé par le fait que** le dispositif de commande d'émission (10) et le dispositif de commande de réception (11) de l'ensemble redondant d'émetteurs-récepteurs sont affectés à des chemins optiques différents.

12. Dispositif de surveillance selon l'une des revendications 1 à 11, **caractérisé par le fait que** l'unité d'évaluation (7) possède au moins deux canaux d'évaluation (20a, 20b) dans lesquels le signal de commutation (23a, 23b) est généré indépendamment l'un de l'autre.

13. Dispositif de surveillance selon la revendication 12, **caractérisé par le fait que** chaque canal d'évaluation (20a, 20b) possède une sortie de commutation (24a, 24b) par laquelle le signal de commutation (23a, 23b) est émis vers une unité externe, l'unité externe étant arrêtée lorsque les sorties de commutation (24a, 24b) sont désactivées et le fonctionnement de l'unité externe étant autorisé sans restriction lorsque les sorties de commutation sont activées.

14. Dispositif de surveillance selon l'une des revendications 12 ou 13, **caractérisé par le fait que** des moyens de contrôle des erreurs sont prévus dans chaque canal d'évaluation (20a, 20b) pour détecter les erreurs dans ce canal d'évaluation (20a, 20b) et pour le contrôle mutuel du canal d'évaluation (20a, 20b).

15. Dispositif de surveillance selon l'une des revendications 13 et 14, **caractérisé par le fait que** lorsqu'un défaut est détecté dans un canal d'évaluation (20a, 20b), la sortie de commutation (24a, 24b) de ce canal d'évaluation (20a, 20b) est désactivée et l'unité externe avec ledit au moins un canal d'évaluation restant intact (20a, 20b) continue à fonctionner en mode dégradé lorsque sa sortie de commutation (24a, 24b) est activée.

16. Dispositif de surveillance selon la revendication 15, **caractérisé par le fait que** le fonctionnement dégradé n'est maintenu que pendant une période de temps prédéterminée.

17. Dispositif de surveillance selon l'une des revendications 14 à 16, **caractérisé par le fait que** les moyens de surveillance des défauts sont conçus pour détecter les défauts dans les sorties de commutation (24a, 24b), et **par le fait que** lorsqu'un défaut dans la sortie de commutation (24a, 24b) d'un canal d'évaluation (20a, 20b) est détecté, ladite au moins une autre sortie de commutation (24a, 24b) est désactivée.

18. Dispositif de surveillance selon l'une des revendications 14 à 16, **caractérisé par le fait que** toutes les sorties de commutation (24a, 24b) sont désactivées lorsqu'une défaillance totale du canal d'évaluation (20a, 20b) est détectée.

19. Dispositif de surveillance selon l'une des revendications 12 à 18, **caractérisé par le fait que** des éléments de transmission (4a, 4b) et des éléments de réception (5a, 5b) de chemins optiques différents sont affectés aux canaux d'évaluation (20a, 20b).

20. Dispositif de surveillance selon la revendication 19, **caractérisé par le fait que** les éléments de transmission (4a, 4b) et les éléments de réception (5a, 5b) d'un chemin optique redondant fonctionnent en parallèle, et que si un élément de transmission (4a, 4b) ou un élément de réception (5a, 5b) tombe en panne, ledit au moins un autre élément de transmission (4a, 4b) ou élément de réception (5a, 5b) du chemin optique continue de fonctionner.

21. Dispositif de surveillance selon la revendication 20, **caractérisé par le fait que** les sorties des éléments récepteurs (5a, 5b) d'un chemin optique redondant sont connectées par l'intermédiaire d'un réseau de sommation (17).

22. Procédé de fonctionnement d'un dispositif de surveillance permettant de détecter des objets dans une zone de surveillance au moyen d'une grille lumineuse (1) comportant une unité émettrice/réceptrice (2) à un bord de la zone de surveillance et des moyens de déviation du faisceau au bord opposé de la zone de surveillance,
l'unité émettrice/réceptrice (2) comporte au moins un émetteur-récepteur (8) conçu pour émettre et recevoir des faisceaux lumineux (3a, 3b), dans lequel, lorsque la zone de surveillance est dégagée, les faisceaux lumineux (3a, 3b) frappent les moyens de déviation des faisceaux et sont renvoyés de là vers l'émetteur-récepteur (8), et
dans lequel une interruption des faisceaux lumineux (3a, 3b) a lieu lorsqu'un objet est engagé dans la zone de surveillance, et avec une unité d'évaluation (7) dans laquelle un signal de commutation binaire (23a, 23b) est généré en fonction des signaux reçus de l'émetteur-récepteur (8), dont les états de commutation indiquent si un objet est présent ou non dans la zone de surveillance,
dans lequel des chemins optiques redondants formés par des faisceaux lumineux (3a, 3b) sont formés dans la zone de surveillance avec ledit au moins un émetteur-récepteur (8),
**caractérisé par le fait que** ledit au moins un émetteur-récepteur (8) comporte un dispositif de commande d'émetteur-récepteur (9) avec un dispositif de commande d'émission (10) commandant au moins deux éléments d'émission (4a, 4b) et avec un dispositif de commande de réception (11) commandant au moins deux éléments de réception (5a, 5b),
dans lequel différents chemins optiques sont générés avec les faisceaux lumineux (3a, 3b) émis par les éléments de transmission (4a, 4b), en ce sens que ledit au moins un émetteur-récepteur (8) commande plusieurs paires d'éléments de réception (5a, 5b) avec son dispositif de commande de transmission (10) et commande plusieurs paires d'éléments de réception (5a, 5b) avec son dispositif de commande de réception (11),
dans lequel les faisceaux lumineux (3a, 3b) des éléments de transmission (4a, 4b) forment un arrangement à faisceaux multiples avec des chemins optiques redondants, en ce sens que les faisceaux lumineux (3a, 3b) d'une paire respective d'éléments de transmission (4a, 4b) et d'éléments de réception (5a, 5b) sont déviés par le même moyen de déviation de faisceau et forment des chemins optiques redondants, et que les faisceaux lumineux (3a, 3b) de différentes paires d'éléments de transmission (4a, 4b) et d'éléments de réception (5a, 5b) sont déviés par des moyens de déviation de faisceau différents, décalés dans l'espace, et forment des chemins optiques différents, décalés dans l'espace.
